# EUROPÄISCHE PATENTSCHRIFT

(11) **EP 0 703 133 B1**
(45) Veröffentlichungstag und Bekanntmachung des Hinweises auf die Patenterteilung: **06.03.2002**
(21) Anmeldenummer: 95114781.8
(22) Anmeldetag: 20.09.1995
(51) Int. Cl.: B60T 17/22, B60T 13/74, B60T 13/66

(54) **Verfahren zum Einstellen des Luftspiels von Fahrzeugbremsen**
Method for adjusting the clearance of vehicle brakes
Procédé d'ajustement de la distance de dégagement des freins d'un véhicule

(30) Priorität: 20.09.1994 DE 4433377
(43) Veröffentlichungstag der Anmeldung: 27.03.1996
(73) Patentinhaber: Continental Aktiengesellschaft, 30165 Hannover (DE)
(72) Erfinder: Dieckmann, Thomas, Dr., D-30982 Pattensen (DE)

(56) Entgegenhaltungen:
- DE-A- 4 212 407
- US-A- 5 366 280
- PATENT ABSTRACTS OF JAPAN vol. 15, no. 186 (M-1112), 14.Mai 1991 & JP 03 045462 A (ARAI TOSHIAKI)

## Beschreibung

Die Erfindung betrifft ein Verfahren zum Einstellen des Luftspielsgemäß dem Oberbegriff des Anspruchs 1.

Die herkömmlichen Bremssysteme übernehmen die Rückstellung der Bremsbeläge stets nur passiv, und zwar werden die Bremsbeläge passiv über zwei Mechanismen zurückgestellt:

Erstens über einen Gummidichtring, der den Bremskolben gegen die Bremsflüssigkeit abdichtet, damit die Bremsflüssigkeit nicht austritt. Dieser Gummidichtring ist stramm eingepaßt. Beim Betätigen der Bremse verformt er sich ein wenig, und beim Loslassen der Bremse zieht er den Bremszylinder oder den Bremskolben wieder ein wenig zurück. Durch Verschleiß oder Alterung verringert sich die Rückholwirkung des Gummidichtrings. Die Rückholung wird nicht nur unzulänglich sondern auch unzuverlässig, was ein beträchtliches Sicherheitsrisiko darstellen kann.

Zweitens sind die Bremsscheiben in der Regel so konzipiert, daß sie einen leichten seitlichen Schlag aufweisen. Durch diesen Seitenschlag sollen die jeweiligen Bremsbeläge nach dem Lösen der Bremse wieder zurückgedrückt werden.

Die Beläge werden auf diese Weise auch tatsächlich zurückgestellt, aber nicht so weit, daß sich die Beläge rundherum vollständig von den jeweiligen Bremsscheiben lösen.

Die DE-OS 40 06 081 A1 versucht eine schnellere Erlangung der Bremslösestellung mitels zweier Federn zu erreichen, wovon die erste der beiden Federn aus einer Formgedächtnislegierung hergestellt ist und die zweite, unter Vorspannkraft stehende Feder zum Zwecke der Druckentlastung in der Radbremse aktivierbar ist. So soll zwar eine raschere Kolbenrückstellung an den Radbremszylindern erreicht werden. Ein definiertes Luftspiel ist aber auf diese Weise nicht gegeben.

Ein Verfahren gemäß dem Oberbegriff des Anspruchs 1 ist beispielsweise aus der JP-A-03-045462 bekannt. In dieser Druckschrift wird ein Bremsaktuator vorgestellt, der einen Elektromotor aufweist, mit dessen Hilfe die Bremsbeläge des Aktuators während eines Bremsvorganges gegen eine Bremsscheibe gepresst werden können. Nach Beendigung des Bremsvorganges wird der Elektromotor des Bremsaktuators in umgekehrter Richtung betrieben, so dass die Bremsbeläge von der Bremsscheibe abheben. Hierbei wird der Drehwinkel, den der Elektromotor durchläuft, überwacht und nachdem der Elektromotor einen bestimmten Drehwinkel durchlaufen hat und sich ein definierter Luftspalt zwischen den Bremsbelägen und der Bremsscheibe eingestellt hat, wird der Elektromotor angehalten.

Der aus der JP-A-03-045462 bekannte Bremsaktuator weist den Vorteil auf, dass sich mit ihm ein definierter Luftspalt zwischen den Bremsbelägen und der Bremsscheibe einstellen lässt. Er lässt sich jedoch nicht so betreiben, dass zuverlässig sichergestellt werden kann, dass der Abhebevorgang genau soweit (aber auch nicht weiter) durchgeführt wird, bis ein vollständiger Freilauf der Bremsen und damit der Räder sichergestellt ist.

Der Erfindung liegt die Aufgabe zugrunde, ein Verfahren zum Einstellen des Luftspiels zwischen Bremsbelägen und Reibflächen von Fahrzeugbremsen zu schaffen, bei dem sichergestellt ist, dass der Abhebevorgang genau soweit (aber auch nicht weiter) durchgeführt wird, bis vollständiger Freilauf der Bremsen und damit der Räder sichergestellt ist.

Die Aufgabe wird durch die kennzeichnenden Merkmale des Anspruchs 1 gelöst.

Die Sensordaten können entweder mittels mindestens eines speziellen Abstandssensors oder mittels Auswertung von Motordaten (Strom, Spannungsbedarf, Drehzahl) gewonnen werden.

Der mit der Erfindung erzielte Vorteil ist insbesondere darin sehen, dass der Abhebe- und Rückholvorgang optimal verwirklicht wird und der Abhebevorgang nur so weit wie nötig erfolgt, um einerseits völlige Freigabe der Bremsen und damit Freilauf der Räder zu erreichen, und um andererseits im Bedarfsfalle ein schnelles Zugreifen der Bremsen zu gewährleisten.

Vorteilhafterweise wird das Abheben der Bremsbeläge von den jeweiligen Reibflächen mittels jeweils eines in Umkehrrichtung elektrisch betriebenen Stellmotors durchgeführt. In diesem Fall ist es nämlich möglich, diesen elektromechanischen Stellmotor nicht nur zum Abheben des Bremsbelags von der jeweiligen Reibfläche zu verwenden; dieser Stellmotor kann in Reversionsbetrieb auch zum Aktivieren der Bremse dienen. Hierdurch reduziert sich die Anzahl der erforderlichen Bauelemente. Da es sich bei dem Stellmotor um ein elektro-mechanisches Bauteil handelt, kann über eine elektrische Bremssteuerung/-regelung auf vielfache Weise in die Funktion dieses Stellmotors eingegriffen werden. Insbesondere kann, wenn die Betätigung der Bremse mit dem Auslösen eines elektrischen Signals verknüpft wird, bei Nichtvorhandensein eines derartigen elektrischen Signals (was das Nichtvorhandensein von Bremsbetätigungsphasen anzeigt) ein Signal zum Abheben des Bremsbelags von der jeweiligen Reibfläche an den Stellmotor gegeben werden.

Die Sensordaten können entweder mittels mindestens eines speziellen Abstandssensors oder mittels Auswertung von Motordaten (Strom, Spannungsbedarf, Drehzahl) gewonnen werden.

Wenn man das Luftspiel regelmäßig (z. B. nach jedem Start des Fahrzeugmotors) um einen kleinen Wegbetrag vor- und zurückgestellt, können damit die mechanisch zu bewegenden Komponenten der Bremsen gangbar gehalten werden.

Die Praxis hat gezeigt, daß Bremsen unzuverlässig werden, wenn sie zu wenig oder zu selten benutzt werden. Dann werden die beweglichen Teile der Bremse durch Korrosion und Schmutz schwergängig oder sie setzen sich sogar fest.

Durch das aktive Vorwärts- und Rückwärtsfahren der Bremsbeläge mittels des Stellmotors können derartige Alterungserscheinungen eingedämmt oder sogar ganz verhindert werden.

Ein weiterer Aspekt der Erfindung ergibt sich aus der Tatsache, daß sich das Ansprechen der Bremsen bei Nässe vermindert und bei ungleichmäßiger Nässe insoweit verschlechtert, daß die Bremsen ungleichmäßig "ziehen". Das liegt daran, daß es bei Nässe stets einen Flüssigkeitsfilm auf den Reibflächen gibt.

Dem wird dadurch vorgebeugt, dass die Bremse bei Nässe regelmäßig (z. B. alle 10 Sekunden) kurzzeitig und für den Fahrer unmerklich, geringfügig betätigt wird, wird der Flüssigkeitsfilm abgestreift. Somit haben die Bremsen praktisch niemals einen störenden Wasserfilm und sind jederzeit funktionsbereit.

Nach einer nützlichen Ausgestaltung dieses erfinderischen Merkmals wird die Funktion der kurzzeitigen Verringerung des Luftspiels über ein Steuersignal, insbesondere in Verbindung mit einer Scheibenwischerbetätigung, aktiviert.

Die genannten Maßnahmen (wie z. B. Einstellen des Luftspiels, Gängigmachen der Bremse, Entfernen eines Wasserfilms von den Bremsscheiben usw.) sollten vorzugsweise stets nur dann durchgeführt werden, wenn die Bremse gerade nicht zur Verzögerung des Fahrzeugs aktiviert ist.

Im folgenden soll die Erfindung anhand eines Blockdiagramms erläutert werden.

Das Fahrzeug, das über ein Bremspedal zur Einleitung eines Bremsvorgangs verfügt, erhält einen Bremspedalsensor 2, der zumindest ein einfaches Signal während der Betätigung der Bremse gibt.

Auch verfügt das Fahrzeug über mindestens einen Bremsaktor 4, insbesondere mit Reibfläche(n) und Bremsbelag(belägen).

Darüber hinaus verfügt das Fahrzeug über Mittel zur Darstellung von Fahrzeugdaten (Fahrzeug-Bus-Daten) 6. Diese Daten können, wie z. B. Strombedarf 6a, Spannungsbedarf 6b, Drehzahl 6c, Scheibenwischer-Betriebssignal 6d aus bordeigenen Mitteln bereits vorhanden sein oder, wie z. B. ein Reibfläche/Bremsbelag-Abstandssensorsignal 6e erst mit erfinderischen Mitteln gewonnen werden.

Zwischen Bremspedalsensor 2 und Fahrzeug-Bus-Daten 6 einerseits und Bremsaktor(en) 4 andererseits befindet sich eine Bremssteuerung/-regelung 8 mit dem Eingang E1 (Bremspedalsensor) 10, den Eingängen E2 (Fahrzeug-Bus-Daten) 12 und den Ausgängen 14 zu den Bremsaktoren 4.

Innerhalb der Bremssteuerung/-regelung 8 wird zunächst abgefragt: "Bremsung?" 16. Falls "Ja", wird der Bremsaktor 4 in üblicher Weise evtl. mit Bremsprogramm ABS, ASR, FDR usw. 22 betätigt 24. Diese Funktionen sind in dem Blockdiagramm gestrichelt eingetragen.

Wird jedoch die Abfrage: "Bremsung?" 16 mit einem "Nein" beantwortet, so werden die erfindungsgemäßen Grund- 18 und Zusatzfunktionen 20 ausgelöst.

Die Grundfunktion 18 besteht in der aktiv durchgeführten, völligen Freigabe (Freilauf) der Reibflächen, die über einen Abstandssensor Reibfläche/Bremsbelag gesteuert wird. Im vorliegenden Blockdiagramm ist das Signal des Abstandssensors 6e zu den Fahrzeug-Bus Daten 6 zusammen dargestellt.

Die Zusatzfunktionen 20 können insbesondere darin bestehen, daß die Bremse anläßlich jeden Fahrzeugstarts durch aktives Hin- und Herbewegen der Beläge gängig gemacht wird.

Eine weitere Zusatzfunktion 20 besteht in der periodischen, unmerklichen Betätigung der Bremse bei Nässe.
Diese Zusatzfunktion 20 kann z. B. während des Betriebs des Scheibenwischers aktiviert werden.

Aus alledem wird ersichtlich, daß die Grund- 18 und Zusatzfunktionen 20 vorteilhafterweise mit nur einem in Umkehrrichtung betreibbaren elektromechanischen Stellmotor möglich ist.

### Bezugszeichenliste

- 2: Bremspedalsensor
- 4: Bremsaktor
- 6: Fahrzeug-Bus-Daten
6a Strombedarf
6b Spannungsbedarf
6c Drehzahl
6d Scheibenwischer-Betriebssignal
6e Reibfläche/Bremebelag-Abstandssensorsignal
- 8: Bremssteuerung/-regelung
- 10: Eingang E1 (Bremspedalsensor)
- 12: Eingänge E2 (Fahrzeug-Bus-Daten)
- 14: Ausgänge (Bremsaktoren)
- 16: "Bremsung?"
- 18: Grundfunktion
- 20: Zusatzfunktionen
- 22: Bremsprogramm ABS, ASR, FDR, ...
- 24: "Bremse betätigen!"

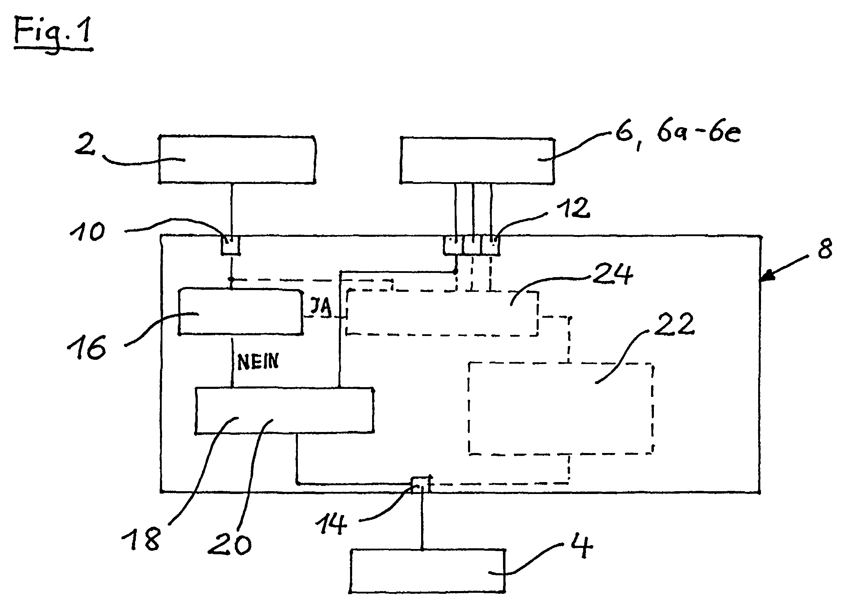

## Patentansprüche

1. Verfahren zum Einstellen des Luftspiels zwischen Bremsbelägen und Reibflächen von Fahrzeugbremsen, wobei das Abheben der Bremsbeläge von den jeweiligen Reibflächen ein außerhalb der Bremsbetätigungsphasen aktiv steuerbarer oder regelbarer Abhebe- und Rückholvorgang ist,
**dadurch gekennzeichnet, dass**
der aktive Abhebe- und Rückholvorgang außerhalb der Bremsbetätigungsphasen mittels Sensordaten (6e) soweit, aber nicht weiter, durchgeführt wird, bis auf einen vollständigen Freilauf geschlossen werden kann.

2. Verfahren nach Anspruch 1, **dadurch gekennzeichnet, dass** der jeweilige Abhebe- und Rückholvorgang mittels eines in Umkehrrichtung betriebenen Stellmotors durchgeführt wird, wobei der Stellmotor im Normalbetrieb zum Aktivieren der Bremse dient.

3. Verfahren nach einem der Ansprüche 1 - 2, **dadurch gekennzeichnet, dass** das Luftspiel periodisch, z. B. nach jedem Motorstart, um einen kleinen Wegbetrag vor - und zurückgestellt wird.

4. Verfahren nach einem der Ansprüche 1 - 3, **dadurch gekennzeichnet, dass** bei Nässe das Luftspiel während der Fahrt kurzzeitig periodisch, z. B. alle 10s, geringfügig verringert wird.

5. Verfahren nach Anspruch 4, **dadurch gekennzeichnet, dass** die Zusatzfunktion (20) der kurzzeitig periodischen Verringerung des Luftspiels über ein Steuersignal z. B. aus einer Scheibenwischerbetätigung (6d), aktiviert wird.

## Claims

1. Method of setting the air gap between brake linings and frictional faces of vehicle brakes, the raising of the brake linings from the respective frictional faces being a raising and returning process which is actively controllable or regulatable externally of the brake actuating phases, **characterised in that** the active raising and returning process is accomplished by means of sensor data (6e) externally of the brake actuating phases to such an extent, but no further, until a full freewheeling movement can be completed.

2. Method according to claim 1, **characterised in that** the respective raising and returning process is accomplished by means of a setting motor, which is operated in the reverse direction, the setting motor serving to activate the brake during normal operation.

3. Method according to one of claims 1 - 2, **characterised in that** the air gap is set forwardly or backwardly by a small distance periodically, e.g. after each start of the engine.

4. Method according to one of claims 1 - 3, **characterised in that**, for wet conditions, the air gap is slightly reduced during the journey for a brief time periodically, e.g. every 10 s.

5. Method according to claim 4, **characterised in that** the additional function (20) of the briefly periodic reduction in the air gap is activated via a control signal, e.g. from a windscreen wiper actuation (6d).

## Revendications

1. Procédé d'ajustement de la distance de dégagement, entre des garnitures de frein et des surfaces de friction, de freins de véhicules, le dégagement des garnitures de freins vis-à-vis des surfaces de friction respectives étant un processus de dégagement et de rappel, pouvant être soumis à une commande ou une régulation active, en dehors des phases d'actionnement des freins,
**caractérisé en ce que**
le processus de dégagement et de rappel actif est effectué en dehors des phases d'actionnement des freins, à l'aide de données de capteurs (6e), mais ne peut être continué temporellement au-delà, jusqu'à ce qu'on ait conclu à un mouvement libre complet.

2. Procédé selon la revendication 1, **caractérisé en ce que** processus de dégagement et de rappel respectif est effectué à l'aide d'un servomoteur à fonctionnement avec inversion du sens de rotation, le servomoteur servant en fonctionnement normal à activer le frein.

3. Procédé selon l'une des revendications 1 à 2, **caractérisé en ce que** la course de déplacement de réglage de la distance de dégagement est parcourue dans un sens et dans l'autre, d'une faible valeur, périodiquement, par exemple après chaque démarrage du moteur.

4. Procédé selon l'une des revendications 1 à 3, **caractérisé en ce que**, en cas de sol mouillé, la distance de dégagement est légèrement diminuée pendant le roulage, brièvement, périodiquement, par exemple toutes les 10 secondes.

5. Procédé selon la revendication 4, **caractérisé en ce que** la fonction additionnelle (20) de brève diminution périodique de la distance de dégagement est activée par l'intermédiaire d'un signal de commande, tiré par exemple de l'actionnement des essuie-glaces (6d).
